# EUROPÄISCHE PATENTSCHRIFT

(11) **EP 3 433 508 B1**
(45) Veröffentlichungstag und Bekanntmachung des Hinweises auf die Patenterteilung: **16.12.2020**
(21) Anmeldenummer: 17717618.7
(22) Anmeldetag: 02.03.2017
(51) Int. Cl.: F16D 65/18, F16D 11/00, F16C 27/06

(54) **ZUSTELLEINRICHTUNG FÜR EINE FAHRZEUGSCHEIBENBREMSE MIT KARDANISCHEM DREHLAGER UND KUPPLUNGSRING**
ACTUATOR FOR A VEHICLE DISC BRAKE WITH CARDANIC BEARING AND CLUTCH RING
ACTIONNEUR POUR FREIN A DISQUE DE VÉHICULE AVEC JOINT CARDANIQUE ET EMBRAYAGE À ANNEAU

(30) Priorität: 24.03.2016 DE 102016105611
(43) Veröffentlichungstag der Anmeldung: 30.01.2019
(60) Teilanmeldung: 20199255.9
(73) Patentinhaber: BPW Bergische Achsen KG, 51674 Wiehl (DE)
(72) Erfinder: KLAAS, Thomas, 51580 Reichshof (DE); DAMBERG, Andreas, 51588 Nümbrecht (DE); WEBER, Udo, 51597 Morsbach (DE)
(74) Vertreter: Christophersen Patentanwälte
(86) Internationale Anmeldenummer: PCT/DE2017/100163
(87) Internationale Veröffentlichungsnummer: WO 2017/162229

(56) Entgegenhaltungen:
- EP-A1- 1 985 475
- EP-B1- 0 531 321
- WO-A1-2008/072742
- DE-A1-102005 018 157
- DE-A1-102006 031 738
- DE-A1-102007 007 493
- DE-B3-102012 108 672
- FR-A- 1 560 109
- FR-A1- 2 932 237

## Beschreibung

Die Erfindung betrifft eine Zustelleinrichtung für eine Fahrzeug-Scheibenbremse nach dem Oberbegriff des Patentanspruchs 1, ein für die Zustelleinrichtung geeignetes kardanisches Drehlager nach dem Oberbegriff des Patentanspruchs 21.

Aus der EP 0 531 321 B1, der WO 2015/117601 A1 und der DE 102 60 597 B sind Fahrzeug-Scheibenbremsen bekannt, die zum Ausgleich des betriebsbedingten Verschleißes an den Bremsbelägen und an der Bremsscheibe mit einer Nachstelleinrichtung versehen sind. Diese passt den Abstand zwischen den Bremsbelägen und der Bremsscheibe entsprechend dem zunehmenden Verschleiß sukzessive an, und hält so dieses sogenannte Lüftspiel in einem konstruktiv vorgegebenen Rahmen. Die Betätigung der Nachstelleinrichtung erfolgt über ein Antriebselement, welches in dem Gehäuse der Scheibenbremse drehbar auf einer zu der Drehachse der Bremsscheibe parallelen Achse angeordnet ist. Das Antriebselement wird durch die Bremszuspanneinrichtung der Scheibenbremse in Drehung versetzt, z. B. durch einen in dem Bremsgehäuse angeordneten Drehhebel, welcher die Bremskraft verstärkt. Das Antriebselement der Nachstelleinrichtung ist auf einer zentral angeordneten Welle drehgelagert. Diese ist an ihrem der Bremsscheibe abgewandten Ende mit Schlüsselflächen versehen, um durch Zurückdrehen der Welle die Nachstelleinrichtung wieder vollständig in die Ausgangsposition zurückzustellen. Dies erfolgt üblicherweise beim Austausch verbrauchter Bremsbeläge gegen neue Bremsbeläge.

Die Präzision und Zuverlässigkeit der Nachstellung ist wesentlich davon abhängig, dass kein Verkanten der beteiligten Elemente der Nachstelleinrichtung eintritt. Zu diesem Zweck ist bei der EP 0 531 321 B1 die Welle, auf der die Elemente der Nachstelleinrichtung angeordnet sind, so in dem Bremsgehäuse abgestützt, dass sie leichte Pendelbewegungen ausführen kann. Hierzu ist die Welle über ein kardanisches Drehlager in einer Öffnung des Bremsgehäuses abgestützt. Als kardanisches Drehlager dient eine Buchse aus einem inneren Stahlring, einem äußeren Stahlring sowie dazwischen angeordnetem, elastisch verformbarem Material.

Die Zustelleinrichtung nach der EP 0 531 321 B1 ist, was die Nachstelleinrichtung betrifft, aus vielen Bauteilen und Elementen zusammengesetzt, was eine entsprechend aufwendige Montage erfordert.

Aus der EP 1 985 475 A1 ist ein kardanisches Drehlager bekannt bestehend aus einem verformbaren Gummiring, der innen mit einem ersten Metallring, und außen mit einem zweiten Metallring versehen ist, wodurch diese beiden Metallringe kardanisch gegeneinander abgestützt sind. Auf diese Weise wird ein Dämpferlager für eine Federbeinlagerung für Radaufhängungen gebildet.

Aus der FR 1 560 109 ist eine Kombination aus einem Kardangelenk und einem dem Kardangelenk nachgeschalteten Kupplungsmechanismus bekannt. Der Kupplungsmechanismus ist mit einer auf einem kegelförmigen Grundkörper angeordneten Kupplungsverzahnung versehen, mit einer Vielzahl jeweils symmetrischer Verzahnungen, welche mit den zu kuppelnden Elementen zusammenwirken.

Aus der FR 2 932 237 ist für die Verwendung bei einem Rasenmäher-Antrieb ein Zahnradantrieb bekannt, dessen einzelnen Zähne asymmetrisch gestaltet sind, d. h. die eine Zahnflanke weist einen anderen Flankenwinkel als die andere Zahnflanke auf.

Der Erfindung liegt die Aufgabe zugrunde, die genannte Zustelleinrichtung dahingehend weiterzuentwickeln, dass diese kostengünstiger herstellbar ist und mit weniger Bauteilen auskommt.

Zur Lösung dieser Aufgabe wird eine Zustelleinrichtung für eine Fahrzeug-Scheibenbremse mit den Merkmalen des Anspruchs 4 vorgeschlagen.

Ebenfalls gelöst wird die genannte Aufgabe durch entsprechend gestaltete Bauteile bzw. Bauteilgruppen der Zustelleinrichtung, nämlich durch beispielsweise einen Kupplungsring und ein kardanisches Drehlager mit den Merkmalen des Patentanspruchs: 1

Zur baulichen Vereinfachung trägt bei, dass ein Stahlring des kardanischen Drehlagers gleitbeweglich unmittelbar gegen einen zylindrischen Lagerabschnitt abgestützt ist, mit dem die Welle versehen ist. Zur baulichen Vereinfachung trägt ferner bei, dass auf der Achse der Nachstelleinrichtung eine Drehkupplung bestehend aus einem zu der Welle drehfesten ersten Kupplungsteil und einem zu dem Stahlring des kardanischen Drehlagers drehfesten zweiten Kupplungsteil angeordnet ist, wobei das zweite Kupplungsteil ein drehbar auf der zentralen Welle gelagerter, separater Kupplungsring ist. Dieser ist vorzugsweise axial beweglich zu dem Stahlring des kardanischen Drehlagers ausgebildet.

Gemäß einer bevorzugten Ausgestaltung der Zustelleinrichtung ist ein axial wirkendes Federelement zwischen dem Kupplungsring und dem kardanischen Drehlager angeordnet. Als Federelement eignet sich hier insbesondere eine Wellenfeder.

Gemäß einer weiteren Ausgestaltung ist der Stahlring über Formschlusselemente drehfest zu dem Kupplungsring. Als Formschlusselemente können an dem Stahlring ausgebildete Arme dienen, die sich in Achsrichtung der Welle erstrecken, wobei diese Arme vorzugsweise durch axial verlaufende Schlitze voneinander getrennt sind.

Die Innenseiten der Arme bilden gemeinsam eine zylindrische Innenkontur, mit der die Arme auf dem zylindrischen Lagerabschnitt der Welle flächig abgestützt sind, so dass eine relativ große Gleitlagerfläche und damit ein besonders reibungsarmes und verschleißunanfälliges Gleiten der beteiligten Flächen erzielt wird.

Zur Teilereduktion trägt bei, wenn das erste Kupplungsteil ein radial erweiterter Bund ist, der einstückig an der Welle angeformt ist. Vorzugsweise ist dieser Bund im Anschluss an den zylindrischen Lagerabschnitt an der Welle angeordnet.

Die zentrale Welle übernimmt vorzugsweise eine Doppelfunktion, indem sie einerseits Elemente der Nachstelleinrichtung aufnimmt und auf einer gemeinsamen Achse positioniert, und indem sie andererseits eine Rückstellerwelle bildet. Zu diesem Zweck ist die Welle mit einer Antriebsstruktur für ein daran ansetzbares Werkzeug versehen, um durch Zurückdrehen der Rückstellerwelle die Nachstelleinrichtung vollständig in deren Ausgangsposition zurückzustellen, was üblicherweise beim Austausch verbrauchter Bremsbeläge gegen neue Bremsbeläge erfolgt. Für eine leichte Zugänglichkeit beim Ansetzen eines entsprechenden Werkzeuges befindet sich die Antriebsstruktur vorzugsweise an dem bremsscheibenabgewandten Ende der Rückstellerwelle.

Bestandteil des kardanischen Drehlagers kann außer dem Gummi- oder Elastomerelement sowie dem inneren Stahlring ein weiterer, außen auf dem Gummi- oder Elastomerring befestigter Stahlring sein, mit dem das kardanische Drehlager in der Öffnung des Gehäuses sitzt.

Um den Bereich der Nachstellung gegen Umwelteinflüsse zu schützen, insbesondere ein Eindringen von Staub oder Feuchtigkeit, ist Bestandteil des kardanischen Drehlagers außerdem eine umlaufende Dichtlippe, die elastisch gegen die Rückstellerwelle abgestützt ist. Vorzugsweise ist die Dichtlippe gegen jenen zylindrischen Lagerabschnitt der Welle abgestützt, gegen den auch das kardanische Drehlager gleit- und drehbeweglich anliegt.

Für die Anordnung der Dichtlippe ist es von Vorteil, wenn der Stahlring des kardanischen Drehlagers derart mit einer Stufe versehen ist, dass er einen Längsabschnitt geringeren Innendurchmessers, mit dem er gegen den zylindrischen Lagerabschnitt der Welle abgestützt ist, und einen Längsabschnitt größeren Innendurchmessers aufweist, an dem sich innen die Dichtlippe befindet. Auch hier liegt der Vorteil in einer Vereinfachung, da das so weiterentwickelte kardanische Drehlager zugleich die Aufgabe der Abdichtung mit übernimmt.

Zur Realisierung der in einer Nachstelleinrichtung notwendigen Funktion einer Einwegekupplung sind die beiden Kupplungsteile mit Kupplungsstrukturen in Gestalt von über den Umfang der Kupplungsteile verteilt angeordneten Zähnen bzw. Rampen versehen. Die Zähne setzen sich, an zumindest einem der beiden Kupplungsteile, aus ersten Flanken, welche die Rampen bilden, und zweiten Flanken zusammen. Die ersten und zweiten Flanken wechseln einander ab, sind zueinander gegenläufig geneigt und weisen eine unterschiedliche Steigung auf. Die stärker geneigten zweiten Flanken sind erforderlich, um die Welle zwecks Rückführung der Nachstelleinrichtung zurückdrehen zu können. Wegen der Steilheit der zweiten Flanken ist dies zwar mit einem erhöhten Drehwiderstand verbunden, der jedoch mit einem entsprechenden Handwerkzeug ohne Weiteres überwunden werden kann. Zudem wird durch diesen erhöhten Drehwiderstand ein versehentliches Zurückstellen der Nachstelleinrichtung sicher verhindert.

Aus fertigungstechnischen Gründen kann es von Vorteil sein, wenn die Anzahl der Rampen an dem zweiten Kupplungsteil, also dem Kupplungsring, ein ganzzahliges Vielfaches der Anzahl der Rampen an dem ersten, unmittelbar an der Welle ausgebildeten Kupplungsteil beträgt. Denn die Herstellung einer relativ feinen Verzahnung mit vielen Rampen führt grundsätzlich zu erhöhten Fertigungskosten. Das Ziel einer ausreichend feinen Teilung bei der Nachstellung der Bremse lässt sich allerdings bereits erreichen, wenn nur einer der beteiligten Kupplungspartner eine feine Verzahnung mit entsprechend vielen Rampen aufweist und ohne dass eine ebenso feine Verzahnung auch an dem anderen Kupplungspartner realisiert ist. Durch die genannte Ausgestaltung wird die Voraussetzung dafür geschaffen, dass sich die Welle in einem relativ preiswerten Fließpressverfahren herstellen lässt. Hingegen ist der die um ein ganzzahliges Vielfaches feinere Verzahnung aufweisende Kupplungsring präziser, nämlich in einem Sinterverfahren hergestellt.

Mit einer weiteren Ausgestaltung wird vorgeschlagen, dass die Kupplungsstrukturen entlang einer bezüglich der Achse der Welle konischen Ringfläche verteilt angeordnet sind. Vorzugsweise beträgt der Konuswinkel der konischen Ringfläche in Bezug auf die Achse der Welle zwischen 55° und 65°.

Hinsichtlich des das zweite Kupplungsteil bildenden Kupplungsrings ist von Vorteil, wenn dessen die Verzahnung bzw. die Rampen aufweisende Ringfläche konisch angeordnet ist, und wenn die Ringöffnung des Kupplungsrings über ihren Umfang mit radial zu der Achse vorstehenden ersten und demgegenüber zurückspringenden zweiten Umfangsabschnitten versehen ist, die einander abwechseln. Über die ersten Umfangsabschnitte wird in diesem Fall die Drehkopplung zwischen dem Kupplungsring und dem kardanischen Drehlager erreicht.

Nachfolgend wird ein Ausführungsbeispiel anhand der Zeichnungen beschrieben und es werden weitere Vorteile angegeben. Es zeigen:
- Fig. 1: einen Längsschnitt durch eine mit einer Nachstelleinrichtung versehene Fahrzeug-Scheibenbremse entlang der Bremszuspannachse;
- Fig. 2: die in Fig. 1 mit "II" bezeichnete Einzelheit in vergrößertem Maßstab;
- Fig. 3: in einer Explosionsdarstellung die Einzelteile der Nachstelleinrichtung;
- Fig. 4: in einer Explosionsdarstellung ein kardanisches Drehlager und, axial getrennt dargestellt, einen Kupplungsring einer Einwegekupplung, und
- Fig. 5: den Kupplungsring der Einwegekupplung aus einer anderen Perspektive betrachtet.

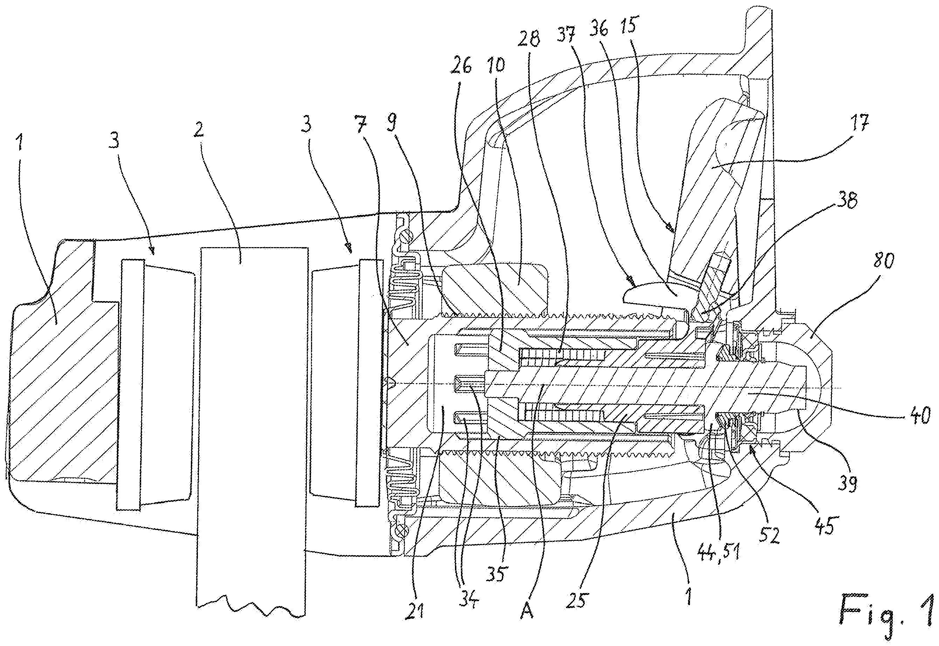

Die Fig. 1 zeigt in einer Übersichtsdarstellung eine druckluftbetätigte Scheibenbremse mit einer integrierten Vorrichtung zum Nachstellen des verschleißbedingten Lüftspiels der Bremse. Eine solche Vorrichtung kommt zum Beispiel in einer für Nutzfahrzeuge bestimmten Gleitsattel-Scheibenbremse zum Ausgleich des mit dem Fahrbetrieb einhergehenden Bremsbelagverschleißes, aber auch des Verschleißes an der Bremsscheibe, zum Einsatz.

Die Nachstelleinrichtung ist, zusammen mit Elementen der Bremszuspannung, in einem Bremsgehäuse 1 angeordnet, welches z. B. der Bremssattel der Scheibenbremse sein kann.

Bestandteil der Scheibenbremse ist ferner die in Fig. 1 ausschnittsweise dargestellte, mit dem Fahrzeugrad verbundene Bremsscheibe 2, gegen die auf jeder ihrer beiden Seiten jeweils ein Bremsbelag 3 arbeitet. Dieser setzt sich in üblicher Weise aus einer Belagrückenplatte und dem eigentlichen Reibbelag zusammen.

Die unmittelbare Beaufschlagung des inneren Bremsbelags 3 mit Bremsdruck erfolgt durch einen gegen diesen Bremsbelag beweglichen Druckstempel 7, der bei der Bremszuspannung gegen die Belagrückenplatte dieses inneren Bremsbelags 3 anliegt. Der Druckstempel 7 steht in einer zur Übertragung der vollen Bremskräfte geeigneten Gewindeverbindung 9 mit einem Druckstück 10, welches längsbeweglich in dem Bremssattel 1 angeordnet ist.

Gegen das Druckstück 10 ist ein Zuspannhebel 15 abgestützt. Der Zuspannhebel 15 ist auf einer zu den Bremsflächen der Bremsscheibe 2 parallelen Schwenkachse in dem Bremsgehäuse 1 gelagert, und er ist mit einem Hebelarm 17 versehen. Gegen den Hebelarm 17 arbeitet das Kraftglied der Fahrzeugbremse. Bei einer druckluftbetätigten Scheibenbremse ist dieses Kraftglied ein Pneumatikzylinder. Die von dem Kraftglied erzeugte Kraft wird über den Hebelarm 17 in ein Schwenken des Zuspannhebels 15 umgesetzt, wodurch es aufgrund der Hebelverhältnisse zu einem die Kraft des Kraftglieds verstärkenden Druck auf das Druckstück 10 kommt. Die Anordnung aus dem Kraftglied, der Hebelanordnung und dem Druckstück bildet die Zuspanneinrichtung der Fahrzeugbremse.

Zur Druckverstärkung arbeitet der Zuspannhebel 15 als ein Exzenter. Dargestellt ist eine gabelförmige Bauart des Zuspannhebels 15. Bei dieser Bauart wird die Betätigungskraft und damit die Bremskraft zu gleichen Teilen und zu beiden Seiten der auf der Achse A zentral angeordneten Nachstelleinrichtung auf das Druckstück 10 übertragen.

In ungebremstem Zustand existiert jeweils ein Abstand (Lüftspiel) zwischen der Bremsscheibe 2 und jedem der beiden Bremsbeläge 3, damit die Teile nicht aneinander schleifen. Zum Ausgleich des durch den Verschleiß an den Belägen und der Bremsscheibe sich immer wieder vergrößernden Lüftspiels dient die Nachstelleinrichtung. Diese ist für eine einfache und kompakte Bauweise der Bremse zumindest teilweise in den zentral im Bremsgehäuse 1 angeordneten Druckstempel 7 integriert. Hierzu ist der Druckstempel 7 mit einem bremsscheibenabgewandt offenen Hohlraum 21 für zumindest Teile der Nachstelleinrichtung versehen. Der Bremsscheibe 2 zugewandt ist der Druckstempel 7 hingegen geschlossen.

Bestandteil der Nachstelleinrichtung ist ein Antriebselement 25, welches innerhalb des Gehäuses der Scheibenbremse auf einer zu der Drehachse der Bremsscheibe parallelen Achse A drehbar angeordnet ist. Das Antriebselement 25 ist während der Bremsbetätigung durch die Zuspanneinrichtung der Bremse und insbesondere durch das Einwirken des Zuspannhebels 15 um die Achse A verdrehbar.

Bestandteile der Nachstelleinrichtung sind ferner ein auf derselben Achse A angeordnetes Nachstellelement 26, sowie ferner eine Übertragungseinrichtung im Bewegungsweg zwischen Antriebselement 25 und Nachstellelement 26. Mittels der Übertragungseinrichtung ist das Nachstellelement 26 durch das Antriebselement 25 sukzessive in jeweils gleichsinnige Drehbewegungen um die Achse A versetzbar. Als Übertragungseinrichtung kommt hier eine Schlingfeder 28 zum Einsatz, die ebenfalls auf der Achse A angeordnet ist.

Das Nachstellelement 26 ist in Bezug auf den umgebenden Druckstempel 7 drehfest, jedoch axial beweglich. Zu diesem Zweck ist der Druckstempel 7 an seiner Innenseite mit Längsnuten 34 versehen, in denen außen an dem Nachstellelement 26 angeformte Vorsprünge oder Nasen 35 längsbeweglich geführt sind. Erreicht wird eine unverdrehbare Längsführung des Nachstellelements 26 relativ zu dem Druckstempel 7. Durch die in Längsrichtung relativ kurzen Nasen 35 kann eine bei der Bremszuspannung nicht vermeidbare, leichte Schwenkbewegung ausgeglichen werden.

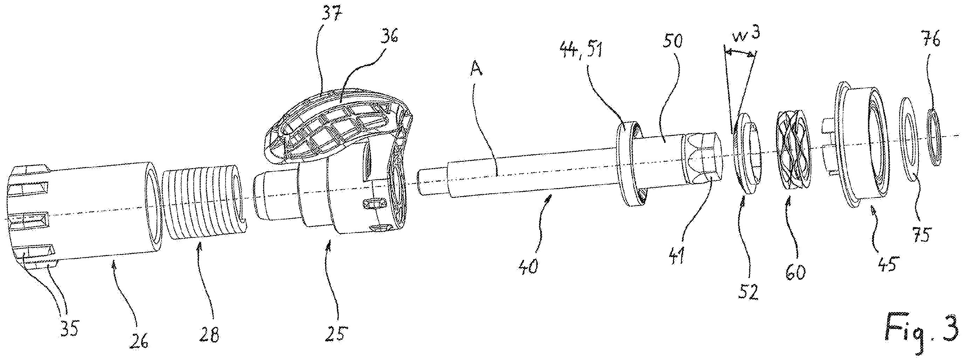

Das Antriebselement 25 ist, bezogen auf das Bremsgehäuse 1, in Längsrichtung der Achse A im Wesentlichen ortsfest angeordnet. Das Antriebselement 25 ist mit einem nach außen abstehenden Arm 37 versehen. Der Arm 37 bildet eine Kulisse 36 (Fig. 3), in die ein an dem Zuspannhebel 15 angeordneter Zapfen 38 eingreift. Die Kulisse 36 an dem Arm 37 und der Zapfen 38 bilden gemeinsam ein Getriebe, über das das Antriebselement 25 durch die Bewegung des Zuspannhebels 15 antreibbar ist. Das Verschwenken des Zuspannhebels 15 führt zu einem Drehen des Antriebselements 25 um die Achse A.

Für eine primär axiale Bauweise der Nachstelleinrichtung befinden sich sowohl das Antriebselement 25 als auch das Nachstellelement 26 auf einer zentral auf der Achse A angeordneten Welle 40. Die Welle 40 ist axial im Wesentlichen unbeweglich in Bezug auf das Gehäuse 1, jedoch drehbeweglich in Bezug auf das Gehäuse 1.

Das Nachstellelement 26 ist fest und insbesondere drehfest mit der Welle 40 verbunden. Das Antriebselement 25 ist drehbeweglich auf der Welle 40 gelagert, und ist zudem drehbar gegenüber dem Nachstellelement 26.

An ihrem der Bremsscheibe 2 abgewandten Ende ist die Welle 40 mit einem Mehrkant 39 als Schlüsselfläche versehen. Daran lässt sich ein Werkzeug ansetzen, um durch Zurückdrehen der Welle 40 die Nachstelleinrichtung wieder vollständig in ihre Ausgangsposition zurückzustellen, was üblicherweise beim Austausch verbrauchter Bremsbeläge gegen neue Bremsbeläge erfolgt. Spätestens nach dem Austausch alter gegen neue Bremsbeläge 3 muss die Nachstellung manuell in ihre Ausgangsstellung zurück gefahren werden. Hierzu wird die Welle 40 und damit zugleich das Nachstellelement 26 und der Druckstempel in einem Drehsinn gedreht werden, der entgegengesetzt der bei der Nachstellung sukzessive eintretenden Drehrichtung ist.

Die Drehbewegung beim Zurückstellen wird nicht auf das Antriebselement 25 übertragen, da sich ein Wendelabschnitt der Schlingfeder 28 in diesem Fall verkleinert, und dieser Wendelabschnitt im Nachstellelement 26 nach Art eines Freilaufs durchrutscht.

Die der Drehübertragung zwischen Antriebselement 25 und Nachstellelement 26 dienende Schlingfeder 28 kann in sich die Funktionen einer Einwegekupplung mit der Funktion einer Überlastkupplung vereinen. Einzelheiten der Schlingfeder 28 und ihrer Funktion sind in der Patentanmeldung WO 2015/117601 A1 beschrieben.

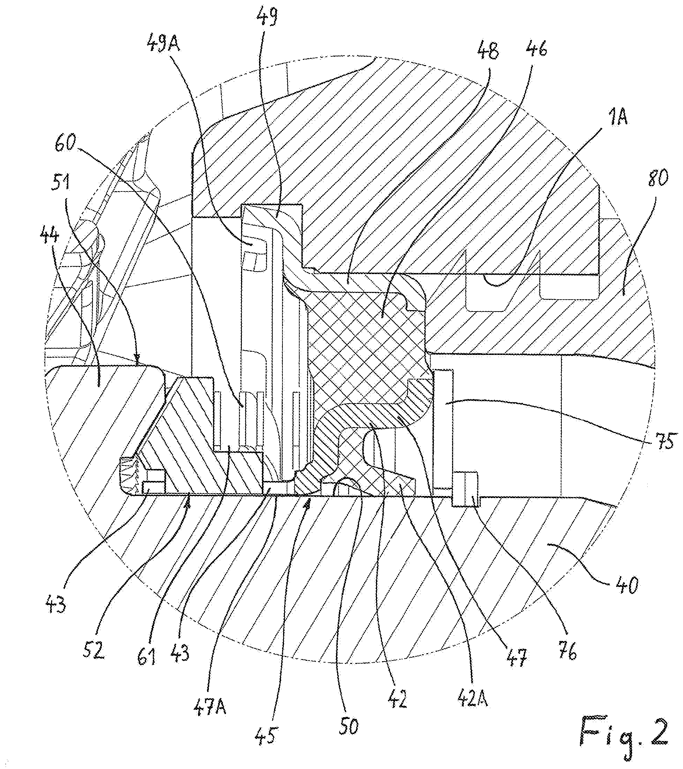

Die Welle 40 ist zweifach gegenüber dem Bremsgehäuse 1 abgestützt, und zwar jeweils mittelbar. Die erste Abstützung erfolgt über das Nachstellelement 26, welches seinerseits in dem Druckstempel 7 geführt ist, der wiederum, über die Gewindeverbindung 9, in dem Druckstück 10 abgestützt ist. Die zweite Abstützung erfolgt an dem anderen, d. h. dem bremsscheibenabgewandten Ende. Dort ist die Welle 40 gemäß Fig. 2 mittelbar, nämlich über ein kardanisches Drehlager 45, in einer runden Öffnung 1A des Bremsgehäuses 1 abgestützt. Das kardanische Drehlager 45 ist als Lagerbuchse so ausgebildet, dass es keine exakt axiale Ausrichtung der Welle 40 erzwingt, stattdessen der Welle 40 ein geringfügiges Pendeln relativ zu dem Gehäuse 1 ermöglicht.

Gemäß Fig. 2 wird dies erreicht, indem Bestandteil des kardanischen Drehlagers 45 ein elastisch verformbarer Gummi- oder Elastomerring 46 ist, an dem innen ein Stahlring 47 befestigt ist, z. B. durch Vulkanisation. Der Stahlring 47 weist eine insgesamt zylindrische Innenkontur auf, die eine zylindrische Gleitlagerfläche 47A bildet, mit der sich der Stahlring 47 gleitbeweglich gegen einen zylindrischen Lagerabschnitt 50 der Welle 40 abstützt.

Bestandteil des als Lagerbuchse gestalteten kardanischen Drehlagers 45 ist außerdem ein äußerer Stahlring 48, der vorzugsweise ebenfalls durch Vulkanisation mit dem Gummi- oder Elastomerring 46 verbunden ist. Mit dem äußeren Stahlring 48 sitzt das kardanische Drehlager 45 in der umgebenden Öffnung 1A des Gehäuses 1. Die beiden Stahlringe 47, 48 haben keinen unmittelbaren Kontakt, da sich zwischen Ihnen das elastisch nachgiebige Material des Gummi- oder Elastomerrings 46 befindet.

Der äußere Stahlring 48 ist mit einem Teil seiner axialen Länge gegen die zylindrische Gehäuseöffnung 1A abgestützt und darin durch Reibschluss fest gehalten. Der Stahlring 48 weist bremsscheibenzugewandt einen Endbereich 49 auf, der zur Reduzierung der Festigkeit mit axial sich erstreckenden Schlitzen 49A versehen ist und leicht nach außen verformt ist.

Der Endbereich 49 ermöglicht es, das kardanische Drehlager 45 nach Art einer Rastung hinter einem neben der Gehäuseöffnung 1A ausgebildeten Hinterschnitt im Gehäuse 1 in Längsrichtung zu fixieren.

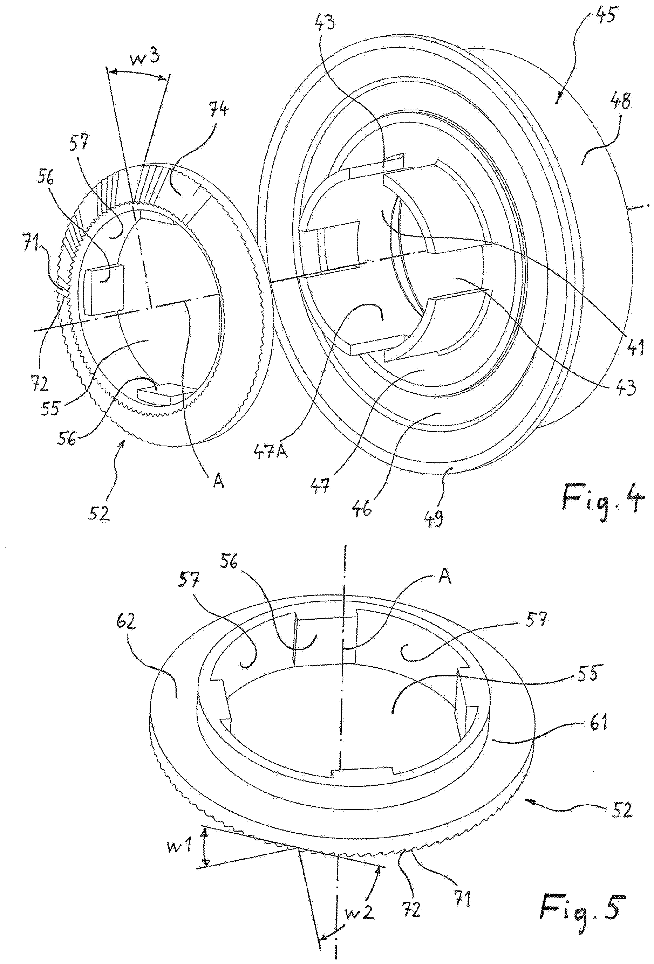

Der innere Stahlring 47 ist derart mit einer Stufe versehen, dass der innere Stahlring 47 einen Längsabschnitt 41 geringeren Innendurchmessers (Fig. 4), an dem sich die Gleitlagerfläche 47A zur Anlage gegen den zylindrischen Lagerabschnitt 50 der Welle befindet, und einen zweiten Längsabschnitt 42 größeren Innendurchmessers aufweist. An dem Längsabschnitt 42 größeren Innendurchmessers ist innen eine Dichtlippe 42A durch Vulkanisation befestigt, die gegenüber dem zylindrischen Lagerabschnitt 50 der Welle 40 abdichtet. Auf diese Weise kann keine Feuchtigkeit und kein Staub in den Bereich der Drehlagerung gelangen. Als Alternative und um eine Vulkanisation zu vermeiden, kann ein Wellendichtring zum Einsatz kommen.

Auf dem Längsabschnitt 41 geringeren Durchmessers ist der Stahlring 47 in Form eines Zylinders axial verlängert und hier mit axial, d. h. parallel zu der Achse A, sich erstreckenden Schlitzen 43 versehen. Infolge der Schlitze 43 weist der Stahlring 47 auf dem Längsabschnitt 41 (Fig. 4) einzelne, durch die Schlitze 43 voneinander getrennte Arme auf, die sich axial erstrecken. Die Innenseiten dieser Arme bilden gemeinsam einen Teil jener zylindrischen Gleitlagerfläche 47A, mit der der Stahlring 47 auf dem zylindrischen Lagerabschnitt 50 der Welle 40 gleitbeweglich ist.

Die durch die Schlitze 43 voneinander getrennten, sich axial erstreckenden Arme weisen an ihren Innenseiten, bei gemeinsamer Betrachtung, eine zylindrische Innenkontur auf, so dass sich hier eine flächige Abstützung auf dem zylindrischen Lagerabschnitt 50 ergibt.

Diese Gestaltung des inneren Stahlrings 47 führt zu relativ großen Kontaktflächen zwischen der an dem Stahlring 47 ausgebildeten Gleitlagerfläche 47A und dem zylindrischen Lagerabschnitt 50 der Welle, wodurch ein gutes Gleitverhalten bei geringer Verschleißanfälligkeit erzielt wird.

Vor allem den Figuren 4 und 5 ist zu entnehmen, dass die Schlitze 43 zusammen mit den so gebildeten Armen Formschlusselemente bilden, durch die eine drehfeste Verbindung des Stahlrings 47 mit einem separaten Kupplungsring 52 erreicht wird. Hierzu ist der Kupplungsring 52 an seiner Ringöffnung 55 mit korrespondierenden Formschlusselementen versehen, nämlich mit abwechselnd nach innen zu der Achse A hin vorspringenden ersten Umfangsabschnitten 56 und demgegenüber zurückspringenden zweiten Umfangsabschnitten 57, die also einander abwechseln. Erzielt wird dadurch eine reine Drehkopplung, die also eine freie Längsbewegung des Kupplungsrings 52 gegenüber dem inneren Stahlring 47 zulässt.

Der Kupplungsring 52 umgibt die Welle 40 und zum Teil auch den Stahlring 47, und bildet den einen Bestandteil einer Drehkupplung, die sich insgesamt aus einem ersten Kupplungsteil 51 und dem Kupplungsring 52 als zweitem Kupplungsteil zusammensetzt. Das erste Kupplungsteil 51 ist hier ein im Vergleich zu dem Lagerabschnitt 50 radial erweiterter, einstückig an der Welle 40 angeformter Bund 44.

Ein Federelement 60, welches als Wellenfeder gestaltet ist, stützt sich einerseits gegen das kardanische Drehlager 45 und hier vorzugsweise gegen dessen inneren Stahlring 47 ab, und andererseits gegen den Kupplungsring 52. Der Kupplungsring 52 ist zu diesem Zweck mit einer umlaufenden Stufe 61 versehen, die die Wellenfeder 60 teilweise aufnimmt und bezüglich der Achse A zentriert. Die Feder stützt sich hierbei gegen eine stirnseitige Ringfläche 62 an der Stufe 61 ab. Die Feder 60 sorgt dafür, dass der Kupplungsring als zweites Kupplungsteil 52 dauernd gegen das an der Welle 40 ausgebildete erste Kupplungsteil 51 vorgespannt ist.

Beide Kupplungsteile 51, 52 sind mit gezahnten Kupplungsstrukturen in Gestalt von gleichmäßig über den Umfang der Kupplungsteile verteilt angeordneten Zähnen bzw. Rampen versehen.

Hierzu zeigt Fig. 5, dass sich die zahnförmigen Kupplungsstrukturen aus ersten Flanken 71, welche die Rampen bilden, und zweiten Flanken 72 zusammensetzen, wobei die ersten Flanken 71 und die zweiten Flanken 72 einander abwechseln, eine einander entgegengesetzte Neigung aufweisen, und vor allem einen unterschiedlichen Neigungs- bzw. Flankenwinkel aufweisen. Denn der Flankenwinkel w1 der die Rampen bildenden ersten Flanken 71 beträgt ca. 30° und maximal 45°. Hingegen beträgt der Flankenwinkel w2 der entgegengesetzten Flanken 72 zwischen 60° und 80° und vorzugsweise 70°

Die flacheren Flanken 71 sind von Bedeutung bei der Nachstellung, indem die Zähne sukzessive entsprechend dem Verschleiß der Scheibenbremse wandern, wobei die Rampen aneinander aufsteigen und, im Fall der Überwindung der Rampen, um einen Zahn weiterschalten, womit die Nachstellung durchgeführt ist.

Die steileren Flanken 72 hingegen haben bei der Nachstellung keine direkte Bedeutung, sondern sie dienen insoweit nur als Rastungen, sperren also gegen ein ungewolltes Zurückdrehen.

Andererseits sind die zweiten Flanken 72 zumindest soweit geneigt, dass sie bei bewusster erhöhter Kraftausübung überwindbar sind. Dies ist der Fall bei der Rückstellung der Nachstelleinrichtung durch Drehen der Welle 40 mittels eines an dessen Mehrkant 39 angesetzten Werkzeugs. Über das Werkzeug lässt sich genügend Drehmoment aufbauen, um die aus den Kupplungsteilen 51, 52 bestehende Drehkupplung entgegen dem Nachstellsinn zurückzudrehen. Dies gelingt, wenn der zweite Flankenwinkel w2 zwischen 60° und 80° beträgt.

Von Vorteil ist, dass die Ringflächen mit den Kupplungstrukturen nicht rechtwinklig zu der Achse A angeordnet sind, sondern geneigt. Hierzu ist die Ringfläche 74 des Kupplungsrings 52, an der die Zähne bzw. Rampen ausgebildet sind, entsprechend dem eingetragenen Winkel w3 konisch angeordnet. Auch das andere Kupplungsteil 51, d. h. die unmittelbar an dem Bund 44 der Welle ausgebildete Verzahnung, weist den Winkel w3 auf.

Vorzugsweise beträgt der zwischen der Ringfläche 74 und der Achse A gemessene Konuswinkel zwischen 55° und 65°.

Herstellungstechnisch ist von Vorteil, wenn die Anzahl der Zähne bzw. Rampen an dem zweiten Kupplungsteil 52 ein ganzzahliges Vielfaches der Anzahl der Zähne bzw. Rampen an dem ersten Kupplungsteil 51 beträgt. Dies ist Voraussetzung, um die Welle 40 preisgünstig in einem Fließpressverfahren herzustellen, in dem sich sehr feine Strukturen nicht ohne weiteres fertigen lassen.

Nur der Kupplungsring 52, der die demgegenüber feinere Verzahnung mit einer Teilung, d.h. einem Zahnabstand, von zum Beispiel nur 3,6° aufweist, erfordert ein Herstellungsverfahren, welches feinere Strukturen ermöglicht. Insoweit geeignet ist zum Beispiel ein Sinterverfahren.

Zur axialen Festlegung der Welle 40 an dem kardanischen Drehlager 45 stützt sich der innere Stahlring 47 gegen eine Ringscheibe 75 ab, die wiederum durch einen Sicherungsring 76 gesichert ist, welcher in einer Nut auf dem Außenumfang der Welle 40 sitzt.

Eine aus einem Weichkunststoff bestehende Kappe 80 lässt sich von außen auf die Gehäuseöffnung 1A aufsetzen, um diese zusätzlich zu verschließen. Diese Verschlusskappe 80 trägt dazu bei, ein Eindringen von Feuchtigkeit und Staub in den Bereich der Drehlagerung und ebenso in den Bereich der Nachstellung zu verhindern.

### Bezugszeichenliste

- 1: Gehäuse, Bremssattel
- 1A: Gehäuseöffnung
- 2: Bremsscheibe
- 3: Bremsbelag
- 7: Druckstempel
- 9: Gewindeverbindung
- 10: Druckstück
- 15: Zuspannhebel
- 17: Hebelarm
- 21: Hohlraum
- 25: Antriebselement
- 26: Nachstellelement
- 28: Schlingfeder
- 34: Längsnut
- 35: Nase
- 36: Kulisse
- 37: Arm
- 38: Zapfen
- 39: Mehrkant
- 40: Welle
- 41: Längsabschnitt
- 42: Längsabschnitt
- 42A: Dichtlippe
- 43: Schlitz
- 44: Bund
- 45: kardanisches Drehlager
- 46: Gummi- oder Elastomerring
- 47: Stahlring
- 47A: Gleitlagerfläche
- 48: Stahlring
- 49: Endbereich
- 49A: Schlitz
- 50: Lagerabschnitt
- 51: erstes Kupplungsteil
- 52: zweites Kupplungsteil, Kupplungsring
- 55: Ringöffnung
- 56: Umfangsabschnitt
- 57: Umfangsabschnitt
- 60: Federelement, Wellenfeder
- 61: Stufe
- 62: stirnseitige Ringfläche
- 71: Flanke
- 72: Flanke
- 74: Ringfläche
- 75: Ringscheibe
- 76: Sicherungsring
- 80: Kappe, Verschlusskappe

- A: Achse
- w1: Flankenwinkel
- w2: Flankenwinkel
- w3: Konuswinkel

## Patentansprüche

1. Kardanisches Drehlager (45) bestehend aus einem verformbaren Gummi- oder Elastomerring, der innen mit einem ersten Stahlring (47) mit einer an dessen Innenseite ausgebildeten, zylindrischen Gleitlagerfläche, und außen mit einem zweiten Stahlring (48) zur Befestigung des Drehlagers in einer Montageöffnung verbunden ist, **dadurch gekennzeichnet, dass** der erste Stahlring (47) derart mit einer Stufe versehen ist, dass er einen Längsabschnitt (41) geringeren Innendurchmessers, an dem sich die zylindrische Gleitlagerfläche befindet, und einen Längsabschnitt (42) größeren Innendurchmessers aufweist, an dem sich innen eine über die zylindrische Gleitlagerfläche vorstehende Dichtlippe (42A) befindet.

2. Kardanisches Drehlager nach Anspruch 1, **dadurch gekennzeichnet, dass** an dem Längsabschnitt (41) geringeren Durchmessers durch axial verlaufende Schlitze (43) voneinander getrennte Arme ausgebildet sind, deren Innenseiten zusammen zumindest einen Teil der zylindrischen Gleitlagerfläche bilden.

3. Kardanisches Drehlager nach Anspruch 2, **dadurch gekennzeichnet, dass** die Schlitze (43) und dass die Arme jeweils dieselbe Breite in Umfangsrichtung aufweisen.

4. Zustelleinrichtung für eine Fahrzeug-Scheibenbremse, die zum Ausgleich des betriebsbedingten Verschleißes an den Bremsbelägen und der Bremsscheibe mit einer Nachstelleinrichtung versehen ist, wobei Bestandteile der Nachstelleinrichtung sind:
- ein Antriebselement (25), welches innerhalb des Gehäuses der Scheibenbremse auf einer Achse (A) drehbar angeordnet, und durch eine Bremszuspanneinrichtung in Drehung versetzbar ist,
- eine zentral auf der Achse (A) angeordnete Welle (40), gegenüber der das Antriebselement (25) drehbar gelagert ist,
- ein die Welle (40) in einer Öffnung (1A) des Gehäuses pendelfähig abstützendes, kardanisches Drehlager (45),
**dadurch gekennzeichnet, dass** das kardanische Drehlager (45) nach einem der Ansprüche 1,2 oder 3 ausgebildet ist und zumindest aus einem verformbaren Gummi- oder Elastomerring (46) und einem darin befestigten Stahlring (47) besteht, und dass der Stahlring (47) gleitbeweglich gegen einen zylindrischen Lagerabschnitt (50) der Welle (40) abgestützt ist, dass auf der Achse (A) eine Kupplung bestehend aus einem zu der Welle (40) drehfesten ersten Kupplungsteil (51) und einem zu dem Stahlring (47) drehfesten zweiten Kupplungsteil (52) angeordnet ist, und dass das zweite Kupplungsteil ein drehbar gegenüber der Welle (40) gelagerter Kupplungsring (52) ist.

5. Zustelleinrichtung nach Anspruch 44, **dadurch gekennzeichnet, dass** der Kupplungsring (52) axial beweglich zu dem Stahlring (47) ausgebildet ist.

6. Zustelleinrichtung nach Anspruch 52, **gekennzeichnet durch** ein axial wirkendes Federelement (60) zwischen dem Kupplungsring (52) und dem Stahlring (47).

7. Zustelleinrichtung nach Anspruch 6, **gekennzeichnet durch** eine Wellenfeder als Federelement (60).

8. Zustelleinrichtung nach einem der Ansprüche 44 bis 7 **dadurch gekennzeichnet, dass** der Stahlring (47) über Formschlusselemente drehfest zu dem Kupplungsring (52) ist.

9. Zustelleinrichtung nach Anspruch 8, **dadurch gekennzeichnet, dass** die Formschlusselemente Arme sind, die sich axial erstrecken und durch axial verlaufende Schlitze (43) voneinander getrennt sind, wobei die Innenseiten der Arme gemeinsam eine zylindrische Innenkontur bilden, mit der die Arme auf dem zylindrischen Lagerabschnitt (50) der Welle (40) flächig abgestützt sind.

10. Zustelleinrichtung nach einem der Ansprüche 4 bis 9, **dadurch gekennzeichnet, dass** das erste Kupplungsteil (51) ein radial erweiterter Bund (44) der Welle (40) ist.

11. Zustelleinrichtung nach Anspruch 107, **dadurch gekennzeichnet, dass** der Bund (44) im Anschluss an den zylindrischen Lagerabschnitt (50) an der Welle (40) angeordnet ist.

12. Zustelleinrichtung nach einem der Ansprüche 4 bis 11, **dadurch gekennzeichnet, dass** zum Zurückstellen der Nachstelleinrichtung die Welle (40) mit einer Antriebsstruktur (39) für ein daran ansetzbares Werkzeug versehen ist.

13. Zustelleinrichtung nach Anspruch 12, **dadurch gekennzeichnet, dass** sich die Antriebsstruktur (39) an dem bremsscheibenabgewandten Ende der Welle (40) befindet.

14. Zustelleinrichtung nach einem der Ansprüche 4 bis 13, **dadurch gekennzeichnet, dass** Bestandteil des kardanischen Drehlagers (45) außerdem ein außen auf dem Gummi- oder Elastomerring (46) befestigter, weiterer Stahlring (48) ist, mit dem das kardanische Drehlager in der Öffnung (1A) des Gehäuses sitzt.

15. Zustelleinrichtung nach einem der Ansprüche 4 bis 14, **dadurch gekennzeichnet, dass** Bestandteil des kardanischen Drehlagers (45) außerdem eine umlaufende Dichtlippe (42A) ist, die elastisch gegen die Welle (40) abgestützt ist.

16. Zustelleinrichtung nach Anspruch 152, **dadurch gekennzeichnet, dass** der Stahlring (47) derart mit einer Stufe versehen ist, dass er einen Längsabschnitt (41) geringeren Innendurchmessers, mit dem er gegen den zylindrischen Lagerabschnitt (50) der Welle (40) abgestützt ist, und einen Längsabschnitt (42) größeren Innendurchmessers aufweist, an dem sich innen die Dichtlippe (42A) befindet.

17. Zustelleinrichtung nach einem der Ansprüche 4 bis 16, **dadurch gekennzeichnet, dass** die beiden Kupplungsteile (51, 52) mit Kupplungsstrukturen in Gestalt von über den Umfang der Kupplungsteile verteilt angeordneten Rampen (71) versehen sind.

18. Zustelleinrichtung nach Anspruch 17 **dadurch gekennzeichnet, dass** sich die Kupplungsstrukturen an zumindest einem der Kupplungsteile (51, 52) aus ersten Flanken (71), welche die Rampen bilden, und zweiten Flanken (72) zusammensetzen, wobei die ersten und zweiten Flanken einander abwechseln, zueinander gegenläufig geneigt sind und eine unterschiedliche Steigung aufweisen.

19. Zustelleinrichtung nach Anspruch 17 oder 18, **dadurch gekennzeichnet, dass** die Anzahl der Rampen (71) an dem zweiten Kupplungsteil (52) ein ganzzahliges Vielfaches der Anzahl der Rampen (71) an dem ersten Kupplungsteil (51) beträgt.

20. Zustelleinrichtung nach Anspruch 19 in Verbindung mit Anspruch 7, **gekennzeichnet durch** eine in einem Fließpressverfahren hergestellte Welle (40).

21. Zustelleinrichtung nach Anspruch 19, **gekennzeichnet durch** einen in einem Sinterverfahren hergestellten Kupplungsring (52).

22. Zustelleinrichtung nach einem der Ansprüche 17 - 21, **dadurch gekennzeichnet, dass** die Kupplungsstrukturen an beiden Kupplungsteilen (51, 52) entlang einer bezüglich der Achse (A) konischen Ringfläche verteilt angeordnet sind.

23. Zustelleinrichtung nach Anspruch 22, **dadurch gekennzeichnet, dass** der Konuswinkel zwischen der konischen Ringfläche und dem zylindrischen Lagerabschnitt (50) der Welle (40) 55° - 65° beträgt.

## Claims

1. Cardanic pivot bearing (45) consisting of a deformable rubber or elastomer ring which is connected on the inside to a first steel ring (47) with a cylindrical plain bearing face which is configured on its inner side, and on the outside to a second steel ring (48) for fastening the pivot bearing in a mounting opening, **characterized in that** the first steel ring (47) is provided with a step in such a way that it has a longitudinal portion (41) of smaller internal diameter, on which the cylindrical plain bearing face is situated, and a longitudinal portion (42) of greater internal diameter, on which, on the inside, a sealing lip (42A) which projects beyond the cylindrical plain bearing face is situated.

2. Cardanic pivot bearing according to Claim 1, **characterized in that** arms which are separated from one another by way of axially running slots (43) are configured on the longitudinal portion (41) of smaller diameter, the inner sides of which arms together form at least one part of the cylindrical plain bearing face.

3. Cardanic pivot bearing according to Claim 2, **characterized in that** the slots (43) and the arms have in each case the same width in the circumferential direction.

4. Application device for a vehicle disc brake, which application device is provided with an adjusting device for the compensation of the operation-induced wear on the brake linings and the brake disc, constituent parts of the adjusting device being:
- a drive element (25) which is arranged such that it can be rotated on an axis (A) within the housing of the disc brake, and can be set in rotation by way of a brake application device,
- a shaft (40) which is arranged centrally on the axis (A) and with respect to which the drive element (25) is mounted rotatably,
- a cardanic pivot bearing (45) which supports the shaft (40) such that it can swing in an opening (1A) of the housing,
**characterized in that** the cardanic pivot bearing (45) is configured according to one of Claims 1, 2 or 3 and consists at least of a deformable rubber or elastomer ring (46) and a steel ring (47) which is fastened therein, and **in that** the steel ring (47) is supported such that it can be moved slidingly with respect to a cylindrical bearing portion (50) of the shaft (40), **in that** a coupling consisting of a first coupling part (51) which is fixed to the shaft (40) so as to rotate with it and a second coupling part (52) which is fixed to the steel ring (47) so as to rotate with it is arranged on the axis (A), and **in that** the second coupling part is a coupling ring (52) which is mounted such that it can be rotated with respect to the shaft (40).

5. Application device according to Claim 4, **characterized in that** the coupling ring (52) is configured such that it can be moved axially with respect to the steel ring (47).

6. Application device according to Claim 5, **characterized by** an axially acting spring element (60) between the coupling ring (52) and the steel ring (47).

7. Application device according to Claim 6, **characterized by** a zigzag spring as spring element (60).

8. Application device according to one of Claims 4 to 7, **characterized in that** the steel ring (47) is fixed to the coupling ring (52) via positively locking elements so as to rotate with it.

9. Application device according to Claim 8, **characterized in that** the positively locking elements are arms which extend axially and are separated from one another by way of axially running slots (43), the inner sides of the arms together forming a cylindrical inner contour, by way of which the arms are supported over the full area on the cylindrical bearing portion (50) of the shaft (40).

10. Application device according to one of Claims 4 to 9, **characterized in that** the first coupling part (51) is a radially widened collar (44) of the shaft (40).

11. Application device according to Claim 10, **characterized in that** the collar (44) is arranged on the shaft (40) adjacently with respect to the cylindrical bearing portion (50).

12. Application device according to one of Claims 4 to 11, **characterized in that**, in order to reset the adjusting device, the shaft (40) is provided with a drive structure (39) for a tool which can be attached to it.

13. Application device according to Claim 12, **characterized in that** the drive structure (39) is situated at that end of the shaft (40) which faces away from the brake disc.

14. Application device according to one of Claims 4 to 13, **characterized in that**, moreover, a constituent part of the cardanic pivot bearing (45) is a further steel ring (48) which is fastened on the outside on the rubber or elastomer ring (46) and by way of which the cardanic pivot bearing is seated in the opening (1A) of the housing.

15. Application device according to one of Claims 4 to 14, **characterized in that**, moreover, a constituent part of the cardanic pivot bearing (45) is a circumferential sealing lip (42A) which is supported elastically against the shaft (40).

16. Application device according to Claim 15, **characterized in that** the steel ring (47) is provided with a step in such a way that it has a longitudinal portion (41) of smaller internal diameter, by way of which it is supported against the cylindrical bearing portion (50) of the shaft (40), and a longitudinal portion (42) of greater internal diameter, on which the sealing lip (42A) is situated on the inside.

17. Application device according to one of Claims 4 to 16, **characterized in that** the two coupling parts (51, 52) are provided with coupling structures in the shape of ramps (71) which are arranged distributed over the circumference of the coupling parts.

18. Application device according to Claim 17, **characterized in that** the coupling structures on at least one of the coupling parts (51, 52) are composed of first flanks (71), which form the ramps, and second flanks (72), the first and second flanks alternating with one another, being inclined in opposite directions with respect to one another, and having a different gradient.

19. Application device according to Claim 17 or 18, **characterized in that** the number of ramps (71) on the second coupling part (52) is an integral multiple of the number of ramps (71) on the first coupling part (51).

20. Application device according to Claim 19 in conjunction with Claim 7, **characterized by** a shaft (40) which is produced in an extrusion process.

21. Application device according to Claim 19, **characterized by** a coupling ring (52) which is produced in a sintering process.

22. Application device according to one of Claims 17 to 21, **characterized in that** the coupling structures on the two coupling parts (51, 52) are arranged distributed along a ring surface which is conical with regard to the axis (A).

23. Application device according to Claim 22, **characterized in that** the cone angle between the conical ring surface and the cylindrical bearing portion (50) of the shaft (40) is from 55° to 65°.

## Revendications

1. Palier rotatif à cardan (45), composé d'une bague déformable en caoutchouc ou en élastomère qui est reliée à l'intérieur à une première bague en acier (47) dotée d'une surface de palier lisse cylindrique réalisée sur la face intérieure de celle-ci et à l'extérieur à une deuxième bague en acier (48) pour fixer le palier rotatif dans une ouverture de montage, **caractérisé en ce que** la première bague en acier (47) est dotée d'un gradin de telle sorte qu'elle présente une partie longitudinale (41) de diamètre intérieur inférieur sur laquelle se trouve la surface de palier lisse cylindrique et une partie longitudinale (42) de diamètre intérieur supérieur sur laquelle se trouve à l'intérieur une lèvre d'étanchéité (42A) faisant saillie à partir de la surface de palier lisse cylindrique.

2. Palier rotatif à cardan selon la revendication 1, **caractérisé en ce que** sur la partie longitudinale (41) de diamètre inférieur sont réalisés des bras séparés les uns des autres par des fentes (43) s'étendant axialement, les faces intérieures desdits bras constituant ensemble au moins une partie de la surface de palier lisse cylindrique.

3. Palier rotatif à cardan selon la revendication 2, **caractérisé en ce que** les fentes (43) et les bras présentent respectivement la même largeur dans la direction circonférentielle.

4. Dispositif de réglage pour un frein à disque de véhicule qui est muni d'un dispositif de rattrapage servant à compenser l'usure provoquée par le fonctionnement au niveau des garnitures de frein et du disque de frein, les composants du dispositif de rattrapage étant :
- un élément d'entraînement (25) qui est disposé rotatif sur un axe (A) à l'intérieur du boîtier du frein à disque et qui peut être mis en rotation par un dispositif de serrage du frein,
- un arbre (40) disposé au centre sur l'axe (A) par rapport auquel l'élément d'entraînement (25) est monté rotatif,
- un palier rotatif à cardan (45) servant d'appui flottant à l'arbre (40) dans une ouverture (1A) du boîtier,
**caractérisé en ce que** le palier rotatif à cardan (45) est réalisé selon l'une quelconque des revendications 1, 2 ou 3 et se compose d'au moins une bague déformable (46) en caoutchouc ou en élastomère et d'une bague en acier (47) fixée dans celle-ci, et **en ce que** la bague en acier (47) est en appui coulissant contre une partie de palier cylindrique (50) de l'arbre (40), **en ce qu'**un accouplement composé d'une première pièce d'accouplement (51) verrouillée en rotation par rapport à l'arbre (40) et d'une deuxième pièce d'accouplement (52) verrouillée en rotation par rapport à la bague en acier (47) est disposé sur l'axe (A), et **en ce que** la deuxième pièce d'accouplement est une bague d'accouplement (52) montée rotative par rapport à l'arbre (40).

5. Dispositif de réglage selon la revendication 4, **caractérisé en ce que** la bague d'accouplement (52) est réalisée de manière axialement mobile par rapport à la bague en acier (47).

6. Dispositif de réglage selon la revendication 5, **caractérisé par** un élément de ressort (60) agissant axialement entre la bague d'accouplement (52) et la bague en acier (47).

7. Dispositif de réglage selon la revendication 6, **caractérisé par** un ressort ondulé comme élément de ressort (60).

8. Dispositif de réglage selon l'une quelconque des revendications 4 à 7, **caractérisé en ce que** la bague en acier (47) est verrouillée en rotation par rapport à la bague d'accouplement (52) par des éléments à complémentarité de forme.

9. Dispositif de réglage selon la revendication 8, **caractérisé en ce que** les éléments à complémentarité de forme sont des bras qui s'étendent axialement et sont séparés les uns des autres par des fentes (43) s'étendant axialement, les faces intérieures des bras formant ensemble un contour intérieur cylindrique par lequel les bras sont en appui plan sur la partie de palier cylindrique (50) de l'arbre (40).

10. Dispositif de réglage selon l'une quelconque des revendications 4 à 9, **caractérisé en ce que** la première pièce d'accouplement (51) est un épaulement radialement élargi (44) de l'arbre (40).

11. Dispositif de réglage selon la revendication 10, **caractérisé en ce que** l'épaulement (44) est disposé sur l'arbre (40) à la suite de la partie de palier cylindrique (50).

12. Dispositif de réglage selon l'une quelconque des revendications 4 à 11, **caractérisé en ce que** pour rappeler le dispositif de rattrapage, l'arbre (40) est muni d'une structure d'entraînement (39) pour un outil pouvant être placé sur celle-ci.

13. Dispositif de réglage selon la revendication 12, **caractérisé en ce que** la structure d'entraînement (39) se trouve à l'extrémité de l'arbre (40) qui est détournée du disque de frein.

14. Dispositif de réglage selon l'une quelconque des revendications 4 à 13, **caractérisé en ce qu'**une bague en acier (48) supplémentaire fixée à l'extérieur sur la bague (46) en caoutchouc ou en élastomère fait également partie du palier rotatif à cardan (45), le palier rotatif à cardan reposant sur celle-ci dans l'ouverture (1A) du boîtier.

15. Dispositif de réglage selon l'une quelconque des revendications 4 à 14, **caractérisé en ce qu'**une lèvre d'étanchéité périphérique (42A) fait également partie du palier rotatif à cardan (45) et est en appui élastique sur l'arbre (40).

16. Dispositif de réglage selon la revendication 15, **caractérisé en ce que** la bague en acier (47) est munie d'un gradin de telle sorte qu'elle présente une partie longitudinale (41) de diamètre intérieur inférieur par laquelle elle est en appui contre la partie de palier cylindrique (50) de l'arbre (40), et une partie longitudinale (42) de diamètre intérieur supérieur sur laquelle se trouve la lèvre d'étanchéité (42A) à l'intérieur.

17. Dispositif de réglage selon l'une quelconque des revendications 4 à 16, **caractérisé en ce que** les deux pièces d'accouplement (51, 52) sont munies de structures d'accouplement sous la forme de rampes (71) disposées de manière répartie sur la circonférence des pièces d'accouplement.

18. Dispositif de réglage selon la revendication 17, **caractérisé en ce que** les structures d'accouplement sont composées sur au moins l'une des pièces d'accouplement (51, 52) de premiers flancs (71) qui forment les rampes, et de deuxièmes flancs (72), dans lequel les premiers et deuxièmes flancs sont en alternance les uns avec les autres, sont inclinés en sens opposé les uns par rapport aux autres et présentent une pente différente.

19. Dispositif de réglage selon la revendication 17 ou 18, **caractérisé en ce que** le nombre des rampes (71) sur la deuxième pièce d'accouplement (52) est un multiple entier du nombre des rampes (71) sur la première pièce d'accouplement (51).

20. Dispositif de réglage selon la revendication 19 en relation avec la revendication 7, **caractérisé par** un arbre (40) fabriqué selon un procédé d'extrusion.

21. Dispositif de réglage selon la revendication 19, **caractérisé par** une bague d'accouplement (52) fabriquée selon un procédé de frittage.

22. Dispositif de réglage selon l'une quelconque des revendications 17 à 21, **caractérisé en ce que** les structures d'accouplement sur les deux pièces d'accouplement (51, 52) sont disposées en étant réparties sur une surface annulaire conique par rapport à l'axe (A).

23. Dispositif de réglage selon la revendication 22, **caractérisé en ce que** l'angle de cône entre la surface annulaire conique et la partie de palier cylindrique (50) de l'arbre (40) est compris entre 55° et 65°.
